Europäisches Patentamt

European Patent Office

Office européen des brevets

(11) Veröffentlichungsnummer: **0 446 726 A1**

## (12) EUROPÄISCHE PATENTANMELDUNG

(21) Anmeldenummer: 91103120.1

(22) Anmeldetag: 01.03.91

(51) Int. Cl.5: **B25D 17/12, F01N 1/08**

(30) Priorität: 10.03.90 DE 4007715

(43) Veröffentlichungstag der Anmeldung:
**18.09.91 Patentblatt 91/38**

(84) Benannte Vertragsstaaten:
**AT CH DE DK ES FR GB GR IT LI NL SE**

(71) Anmelder: **MIKSA MARTON DUALFLEX COMPANY LTD.**
**R.R. No. 1, Old Castle**
**Windsor, Ontario NOR 1LO(CA)**

(72) Erfinder: **Miksa, Marton**
**3620 Rankin Street**
**Windsor/ Ontario(CA)**

(74) Vertreter: **Patentanwälte Kohler - Schmid + Partner**
**Ruppmannstrasse 27**
**W-7000 Stuttgart 80(DE)**

(54) Geräuschminderer.

(57) Bei einem Geräuschminderer (1), insbesondere für Druckluftwerkzeuge mit einem einen Anschlußstutzen (4) aufweisenden Gehäuse (2), in dem ein geräuschmindernder Einsatz vorgesehen ist, wird eine wirkungsvolle Geräuschdämpfung der Druckluft dadurch erreicht, daß der Anschlußstutzen (4) in eine Diffusorkammer (6) mündet, an die Diffusorkammer (6) eine den geräuschmindernden Einsatz (12) enthaltende Dämpfungs- und Filterkammer (7) vorgesehen ist, und das Gehäuse (2) einen relativ zum Querschnitt des Anschlußstutzens (4) weiten Auslaß (5) aufweist.

Fig. 1

Rank Xerox (UK) Business Services

Die Erfindung betrifft einen Geräuschminderer, insbesondere für Druckluftwerkzeuge, mit einem einen Anschlußstutzen aufweisenden Gehäuse, in dem ein geräuschmindernder Einsatz vorgesehen ist.

Druckluftwerkzeuge, wie z.B. Druckluftbohrer, -hämmer, -meißel, -schleifwerkzeuge usw. werden mit Druckluft versorgt, die den im Werkzeug vorgesehenen Antrieb antreibt und anschließend ins Freie entweicht. Zur Minderung der relativ lauten und daher für den Arbeiter unangenehmen Ausströmgeräusche der Druckluft, sind die Druckluftwerkzeuge in der Regel mit einer Geräuschminderung oder -dämpfung versehen. Diese Geräuschminderer weisen einen geräuschmindernden Einsatz auf, der von der aus dem Werkzeug ausströmenden Druckluft durchströmt wird. Dabei wird jedoch die Strömungsgeschwindigkeit der Druckluft beträchtlich vermindert. Derart ausgebildete Geräuschminderer oder Schalldämpfer weisen deshalb unter anderem den Nachteil auf, daß sie die Leistung des Druckluftwerkzeuges erheblich d.h. bis zu 20% herabsetzen.

Es hat sich gezeigt, daß die bekannten Geräuschminderer nach kurzer Einsatzdauer eine verminderte Dämpfungsleistung aufweisen und einen größeren Widerstand für die aus dem Werkzeug austretende Druckluft entgegensetzen. Dieser Umstand ist darauf zurückzuführen, daß sich im Geräuschminderer, insbesondere in dem im Gehäuse angeordneten geräuschmindernden Einsatz, das in der Druckluft enthaltene Schmieröl ansammelt, das zum Schmieren der Druckluftwerkzeuge in das Druckluftnetz eingespeist wird. Ferner sammeln sich im Geräuschminderer Rostpartikel an, die sich von der Wandinnenseite des Druckluft-Rohrleitungsnetzes abgelöst haben. Sowohl das Schmieröl als auch die Feststoffpartikel bewirken ein allmähliches Zusetzen des geräuschmindernden Einsatzes, so daß der aus dem Werkzeug austretenden Druckluft allmählich ein immer größerer Widerstand entgegensteht, wodurch die Arbeitsleistung des Druckluftwerkzeuges allmählich abnimmt.

Ein weiterer Nachteil besteht darin, daß üblicherweise die Geräuschminderer im Druckluftwerkzeug selbst im Bereich des Druckluftausgangs angeordnet sind, so daß die aus dem Geräuschminderer austretende Luft in Richtung auf die zu bearbeitende Fläche oder auf das Werkstück bläst. Da die Druckluft auch nach Durchlauf durch den Geräuschminderer nicht völlig ölfrei ist, wirkt sich das Ausblasen der Druckluft auf die zu bearbeitende Fläche insbesondere bei zu schleifenden Flächen, die anschließend lackiert werden sollen, nachteilig aus. Auch ein auf die das Werkzeug bedienende Person gerichteter Luftstrom, insbesondere wenn die aus dem Geräuschminderer austretende Druckluft noch mit Ölpartikeln vermischt ist, wird ebenfalls als unangenehm empfunden.

Der Erfindung liegt daher die Aufgabe zugrunde, einen universell einsetzbaren Geräuschminderer zu schaffen, der die Geräusche der aus dem Druckluftwerkzeug austretenden Druckluft wirkungsvoll dämpft und dabei die Arbeitsleistung des Werkzeuges nur minimal herabsetzt.

Diese Aufgabe wird erfindungsgemäß dadurch gelöst, daß der Anschlußstutzen in eine Diffusorkammer mündet, anschließend an die Diffusorkammer eine den geräuschmindernden Einsatz enthaltende Dämpfungs- und Filterkammer vorgesehen ist und das Gehäuse einen relativ zum Querschnitt des Anschlußstutzens weiten Auslaß aufweist.

Die sich an den Anschlußstutzen anschließende Diffusorkammer ist so gestaltet, daß die Geschwindigkeit der in den Geräuschminderer einströmenden Druckluft stark herabgesetzt wird. Dies wird z.B dadurch erreicht, daß die durchströmte Fläche innerhalb der Diffusorkammer ca. zehn- bis zwanzigmal größer als der Querschnitt des Anschlußstutzens ist. Hierdurch werden Strömungsgeräusche der Druckluft bereits erheblich herabgesetzt. Die Druckluft durchströmt nun die Dämpfungs- und Filterkammer mit einer erheblich verminderten Geschwindigkeit, so daß die Druckstöße der pulsierenden Druckluft effektiver abgebaut werden. Außerdem ist die Verweildauer der Druckluft in der Dämpfungs- und Filterkammer aufgrund der geringen Strömungsgeschwindigkeit wesentlich höher, so daß in der Luft enthaltene Partikel, wie Öl, Rost und dergleichen besser ausgeschieden werden können. Der erfindungsgemäße Geräuschminderer bietet somit den Vorteil, daß die Geräusche der aus dem Druckluftwerkzeug ausströmenden Druckluft effektiv auf einen sehr niederen Wert abgesenkt werden, andererseits die den Geräuschminderer verlassende Luft nahezu partikelfrei ist. Die Überströmöffnungen sind axial versetzt zur Einströmöffnung angeordnet, so daß die Luft zwangsweise umgelenkt wird. Ferner ist die Umfangsfläche des Geräuschminderers frei von Ausströmöffnungen. Weiterhin ist die Ausströmöffnung vorteilhaft an einem zur Einströmöffnung entgegengesetzt liegenden Ende angeordnet.

Schließlich ist der geräuschmindernde Einsatz frei beweglich im Gehäuse angeordnet, so daß er sich durch seine Eigenbewegung selbst reinigen kann, was einem Zusetzen des Filters entgegenwirkt.

Eine andere Ausgestaltung sieht vor, daß der geräuschmindernde Einsatz durch mehrere hintereinander angeordnete Lochscheiben gebildet wird. Vorzugsweise sind die Durchbrechungen der Lochscheiben versetzt zueinander und zu den Durchbrechungen der anderen Löcher angeordnet. Dabei wird jeweils zwischen den einzelnen Lochscheiben eine Kammer gebildet. Dabei treffen die die Durchbrechungen der vorangehenden Lochscheiben durchströmenden Strömungsabschnitte jeweils auf die nachfolgenden Lochscheiben, d. h. zwischen die Durchbrechungen, und werden somit in ihrer Strömungsgeschwindigkeit gebremst und außerdem werden die Strömungsabschnitte wieder miteinander vermischt. Ein derart ausgebildeter Einsatz setzt sich nicht zu und verringert nicht die Leistung des Druckluftwerkzeuges.

Eine wirkungsvolle Reinigung der den Geräuschminderer durchströmenden Druckluft wird dadurch erreicht, daß der geräuschmindernde Einsatz ein Faservlies ist. Außerdem hat das Faservlies aufgrund seiner Elastizität die Eigenschaft, Druckstöße der Druckluft wirkungsvoll zu mindern. Ferner verhindert das Faservlies die Erzeugung von Körperschall, da es vollflächig an der Innenwand des die Dämpfungs- und Filterkammer bildenden Gehäuseteils anliegt, und daher Schwingungen großflächiger Teile des Geräuschminderers unterbindet.

Gemäß einer vorteilhaften Ausführungsform des geräuschmindernden Einsatzes ist das Faservlies mattenförmig ausgebildet und zusammengerollt in der Dämpfungs- und Filterkammer angeordnet. Mattenförmige Faservliese sind als Massenware bekannt und finden in der Regel in Luftfiltern und dergleichen Anwendung. Durch Verwendung eines mehr oder weniger großen mattenförmigen Faservlieses kann die Dichte des geräuschmindernden Einsatzes gezielt gesteuert werden, so daß der Geräuschminderer auf spezielle Anforderungen, z.B. auf spezielle Pulsfrequenzen, einen speziellen Reinigungsgrad, bestimmte Luftdurchsätze usw. abgestellt werden kann. Eine einfache Unterbringung des Faservlieses in der Dämpfungs- und Filterkammer wird dadurch bewerkstelligt, daß die Vliesmatte zusammengerollt wird und vom Auslaß her in den Geräuschminderer eingeschoben wird. Es ist also weder der Einsatz noch das Entfernen des Faservlieses kompliziert bzw. zeitaufwendig.

Eine Abgrenzung der Diffusorkammer wird vorteilhaft dadurch erreicht, daß diese durch eine erste Lochscheibe von der Dämpfungs- und Filterkammer abgetrennt wird. Zwischen der Diffusorkammer und der Dämpfungs- und Filterkammer, die das Faservlies enthält, befindet sich eine Lochscheibe, die die in der Diffusorkammer in ihrer Strömungsgeschwindigkeit verminderte Druckluft gleichmäßig über die Öffnungen der Lochscheibe in die Dämpfungs- und Filterkammer und somit in das Faservlies zur weiteren Dämpfung einleitet. Das Faservlies wird somit gleichmäßig von der Druckluft durchströmt.

Eine exakte Plazierung der Lochscheibe innerhalb des Gehäuses des Geräuschminderers wird vorteilhaft dadurch erreicht, daß die erste Lochscheibe einseitig mit einer Abstützung versehen ist, über die sie an einer Stirnwand des Gehäuses anliegt. Diese Abstützung bestimmt z.B. die Länge der Diffusorkammer. Es können also Lochscheiben mit unterschiedlichen Abstützungen in das Gehäuse eingesetzt werden, um die Größe der Diffusorkammer gezielt auf die Eigenschaften der zu dämpfenden Druckluft einzustellen.

Bei einer anderen Ausführungsform liegt die erste Lochscheibe an einer an der Innenwand des Gehäuses vorgesehenen Stufe an. Bei diesem Ausführungsbeispiel ist die Lochscheibe lediglich z.B. über den Auslaß in das Gehäuse soweit einzuführen, bis es an der dafür vorgesehenen Stufe anliegt, die die Länge der Diffusorkammer bestimmt.

Bevorzugt wird bei einer Ausführungsform die Dämpfungs- und Filterkammer von einer ersten und von einer zweiten Lochscheibe begrenzt. Die erste Lochscheibe stellt die Begrenzung zur Diffusorkammer dar, wohingegen die zweite Lochscheibe die gegenüberliegende Begrenzung der Dämpfungs- und Filterkammer ist und diese z.B. nach außen hin abschließt. Die Öffnungen der Lochscheiben gewährleisten eine gleichmäßige Einströmung der Druckluft in die Dämpfungs- und Filterkammer sowie ein wirkungsvolles Ausströmen der nunmehr gedämpften Druckluft.

Vorteilhaft sind die erste und zweite Lochscheibe gleich ausgebildet. Anstelle von Lochscheiben können jedoch auch z.B. Gitterelemente aus Draht oder dergleichen verwendet werden. Dadurch, daß die Lochscheiben gleich ausgebildet sind, besteht der Geräuschminderer aus einer geringen Anzahl verschiedener Teile, so daß dessen Zusammenbau relativ einfach durchgeführt werden kann. Außerdem werden dadurch die Herstellungskosten niedrig gehalten.

Gemäß einem bevorzugten Ausführungsbeispiel wird der Auslaß durch die zweite Lochscheibe gebildet. Die aus der Dämpfungs- und Filterkammer ausströmende gedämpfte Druckluft strömt somit nach Durchtritt der zweiten Lochscheibe direkt ins Freie. Da die zweite Lochscheibe einen relativ großen Querschnitt aufweist, der im Ausführungsbeispiel dem Querschnitt der Dämpfungs- und Filterkammer entspricht, setzt die zweite Lochscheibe der austretenden Druckluft nahezu keinen nennenswerten Widerstand entgegen.

Eine einfache Halterung dieser zweiten Lochscheibe im Gehäuse des Geräuschminderers wird dadurch erzielt, daß die zweite Lochscheibe auf dem geräuschmindernden Einsatz aufliegt und sich an diesem abstützt. Es bedarf somit keiner speziellen Haltevorrichtungen zum Verhindern, daß die zweite Lochscheibe ins Innere des Gehäuses fällt. Außerdem bewirkt die zweite Lochscheibe, daß der geräuschmindernde Einsatz die gewählte Packungsdichte beibehält und nicht innerhalb des Gehäuses verrutscht.

Ein Herausfallen der zweiten Lochscheibe aus dem Gehäuse wird dadurch verhindert, daß die zweite Lochscheibe über ein Sicherungselement, z.B. einen Sicherungsring, im Gehäuse befestigt ist. Dieses Sicherungselement ist einfach in das Gehäuse einsetzbar, so daß ein schneller Zusammenbau des Geräuschminderers möglich ist. Ebenso ist dieses Sicherungselement leicht wieder aus dem Gehäuse entfernbar, wodurch vorteilhaft der Geräuschminderer z.B. zu Reinigungszwecken schnell zerlegbar ist.

Vorteilhaft ist die Innenseite des Gehäuses im Bereich des Auslasses mit wenigstens einer Ringnut für das Sicherungselement versehen. Die zweite Lochscheibe, die sich am Sicherungselement abstützt, kann bei mehreren Ringnuten in unterschiedlichen Abständen zum Auslaß im Gehäuse des Geräuschminderers angeordnet werden. Hierzu ist lediglich das Sicherungselement in die entsprechende Nut einzusetzen. Diese Verstellmöglichkeit bietet den Vorteil, daß der hinter der zweiten Lochscheibe sich befindende geräuschmindernde Einsatz eine abhängig von der Lage der zweiten Lochscheibe unterschiedliche Pressung erfährt und dadurch eine entsprechende unterschiedliche Dichte aufweist, wodurch gezielt das Dämpfungsverhalten des Geräuschminderers beeinflußt und jeweils auf die spezielle Frequenz der zu dämpfenden Druckluft eingestellt werden kann.

Bei einer anderen Ausgestaltungsmöglichkeit ist vorgesehen, daß die zweite Lochscheibe an einem auf oder in das Gehäuse einschraubbaren Schraubdeckel vorgesehen ist. Auch diese Möglichkeit bietet ein einfaches Einsetzen der zweiten Lochscheibe in das Gehäuse und ebenso ein schnelles Entfernen derselben aus dem Gehäuse. Ferner kann über die Auf- bzw. Einschraubtiefe der Abstand der zweiten Lochscheibe vom stirnseitigen Ende des Gehäuses gezielt eingestellt werden, so daß die Pressung und somit die Dichte des geräuschmindernden Einsatzes wiederum auf die spezielle Pulsfrequenz des zu dämpfenden Druckgases bzw. der Druckluft abgestellt werden kann.

Gemäß einer vorteilhaften Ausführungsform ist der Geräuschminderer aus lösungsmittelfestem Kunststoff hergestellt. Dies hat den Vorteil, daß zur Reinigung der einzelnen Elemente des Geräuschminderers z.B. Fett und Öl lösende Mittel verwendet werden können, so daß das sich im geräuschmindernden Einsatz, d.h.im Faservlies ansammelnde Schmieröl wieder vollständig aus diesem entfernt werden kann. Hierdurch kann die Dämpfungsleistung des Geräuschminderers auf hohem Niveau erhalten werden, ohne daß z.B. die Arbeitsleistung des Druckluftwerkzeuges negativ beeinflußt wird.

Eine bevorzugte Ausgestaltungsform sieht vor, daß das Gehäuse im wesentlichen eine zylinderförmige Gestalt aufweist, und daß der Anschlußstutzen koaxial am Gehäuse angeordnet ist. Dies hat den Vorteil, daß bei aus Kunststoff hergestelltem Geräuschminderer die einzelnen Elemente einfache Spritzgußteile sind. Außerdem gewährleistet ein symmetrischer Aufbau des Geräuschminderers eine optimale Luftverteilung innerhalb des Gehäuses, wodurch eine wirkungsvolle Dämpfung erzielt wird.

Vorteilhaft ist eine zum Druckluftwerkzeug externe Anordnung dadurch verwirklicht, daß der Geräuschminderer über einen Druckluftschlauch mit dem Luftauslaß des Druckluftwerkzeuges verbindbar ist. Der Geräuschminderer kann somit außerhalb der Arbeitsfläche gehalten werden, so daß die aus dem Geräuschminderer austretende Luft nicht das Arbeitsergebnis nachteilig beeinflußt und die das Druckluftwerkzeug bedienende Person nicht durch die austretende Luft belästigt wird. Bei Schleifarbeiten ist dies von besonderem Vorteil, da durch die austretende Luft nunmehr kein Schleifstaub mehr aufgewirbelt wird, der die Arbeit erschwert und gegebenenfalls das Arbeitsergebnis nachteilig beeinflußt.

Weitere Vorteile, Merkmale und Einzelheiten der Erfindung ergeben sich aus der nachfolgenden Beschreibung, in der unter Bezugnahme auf die Zeichnung Ausführungsbeispiele des erfindungsgemäßen Geräuschminderers im einzelnen dargestellt sind. Dabei zeigen:

Fig. 1 eine erste Ausführungsform des Geräuschminderers im Längsschnitt;

Fig. 2 eine zweite Ausführungsform des Geräuschminderers im Längsschnitt;

Fig. 3 eine Teilansicht des Geräuschminderers im Längsschnitt, den Auslaß zeigend; und

Fig 4 eine weitere Ausführungsform des Geräuschminderers im Längsschnitt, den Auslaß zeigend.

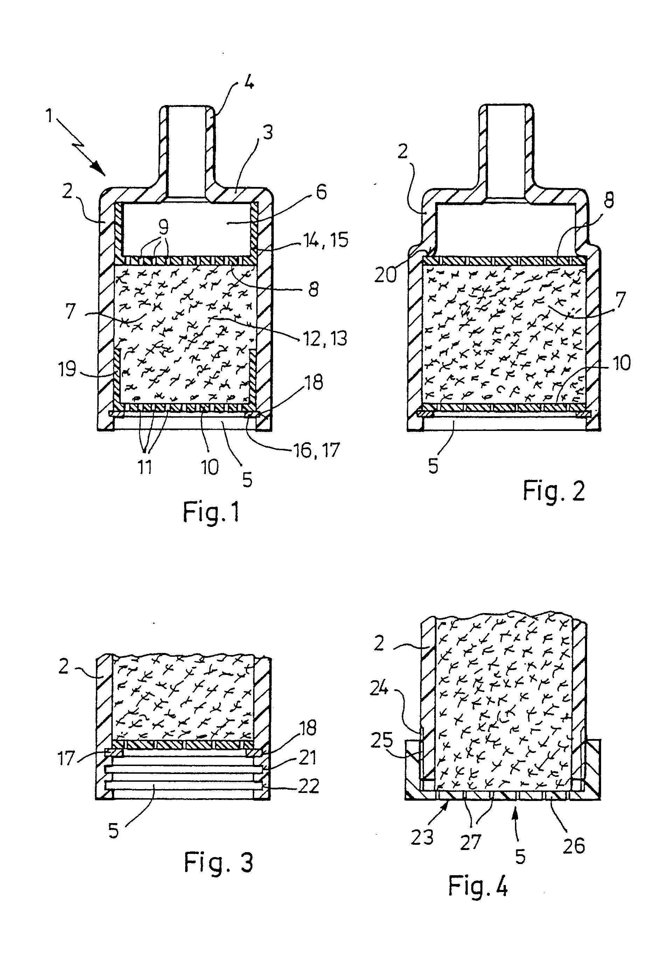

Die Fig. 1 zeigt einen Längsschnitt durch ein erstes Ausführungsbeispiel eines Geräuschminderers 1, der ein Gehäuse 2 aufweist, welches einen kreisförmigen Querschnitt besitzt und am einen stirnseitigen Ende 3 mit einem Anschlußstutzen 4 versehen ist. Der Anschlußstutzen 4 ist koaxial am Gehäuse 2 einstückig angeordnet. Das Gehäuse 2 weist einen Auslaß 5 auf, der dem stirnseitigen Ende 3 gegenüberliegt. Der Innenraum des Gehäuses 2 ist in eine Diffusorkammer 6 und eine Dämpfungs- und Filterkammer 7 aufgeteilt. Die Diffusorkammer 6 schließt sich unmittelbar am stirnseitigen Ende 3 an den Anschlußstutzen 4 an, so daß die durch den Anschlußstutzen 4 in den Geräuschminderer eingeleitete Druckluft zuerst in die Diffusorkammer 6 einströmt. Der Querschnitt der Diffusorkammer 6 beträgt etwa das fünfzehnfache des Querschnitts des Anschlußstutzens 4, wodurch sich eine entsprechende Reduzierung der Strömungsgeschwindigkeit ergibt. Zwischen der Diffusorkammer 6 und der Dämpfungs- und Filterkammer 7 befindet sich eine erste Lochscheibe 8, die mit mehreren Öffnungen 9, z.B. Bohrungen, versehen ist. Im Bereich des Auslasses 5 ist eine zweite Lochscheibe 10 im Gehäuse 2 angeordnet, die ebenfalls mehrere Öffnungen 11 aufweist. Die beiden Lochscheiben 8 und 10 begrenzen die Dämpfungs- und Filterkammer 7, in der ein geräuschmindernder Einsatz 12 vorgesehen ist. Dieser geräuschmindernde Einsatz 12 ist im dargestellten Ausführungsbeispiel ein Faservlies 13, welches mattenartig zugeschnitten und aufgerollt in das Gehäuse 2 bzw. in die Dämpfungs- und Filterkammer 7 eingeschoben ist. Durch die Größe des mattenartigen Zuschnitts kann die Dichte des Faservlieses 13 auf die Pulsfrequenz der durch den Anschlußstutzen 4 einströmenden Druckluft abgestimmt werden.

Bei der in der Fig. 1 wiedergegebenen Ausführungsform stützt sich die erste Lochscheibe 8 über einen als Abstützung 14 ausgebildeten Ring 15 am stirnseitigen Ende 3 des Gehäuses 2 ab, wobei der Ring 15 einen dem Innendurchmesser des Gehäuses 2 entsprechenden Außendurchmesser aufweist. Diese Abstützung 14 bzw. der Ring 15 bestimmt die Länge der Diffusorkammer 6. Über den geräuschmindernden Einsatz 12, d.h. über das Faservlies 13 wird die erste Lochscheibe 8 mit ihrer einstückig daran vorgesehenen Abstützung 14 in Richtung auf das stirnseitige Ende 3 gepreßt und somit in dieser Lage entgegen dem Druck der durch den Anschlußstutzen 4 einströmenden Druckluft gehalten. Das Faservlies 13 wird seinerseits über die zweite Lochscheibe 10 innerhalb der Dämpfungs- und Filterkammer 7 gehalten, wobei sich die zweite Lochscheibe 10 an einem Sicherungselement 16, das z.B. als Sicherungsring 17 ausgebildet ist, abstützt. Der Sicherungsring 17 greift seinerseits in eine an der Innenseite der Wand des Gehäuses 2 vorgesehenen Ringnut 18 ein. Der Sicherungsring 17 ist somit formschlüssig im Gehäuse 2 festgelegt und stützt die zweite Lochscheibe 10 entgegen der Kraft des zusammengepreßten Faservlieses 18 und entgegen der Kraft der Druckluft sicher ab. Der geräuschmindernde Einsatz 12 kann auch aus mehreren übereinander angeordneten runden scheibenförmigen Faservliesmatten aufgebaut sein.

Bevorzugt weist die zweite Lochscheibe 10 ebenfalls einen dem Ring 15 entsprechenden Ring 19 auf, so daß die beiden die Lochscheibe 8 bzw. 10 und den Ring 15 bzw. 19 enthaltenden Elemente gleich aufgebaut sind.

Bei dem in der Fig. 2 wiedergegebenen Ausführungsbeispiel stützt sich die erste Lochscheibe 8 an einer im Gehäuse 2 vorgesehenen Stufe 20 ab. Die Stufe 20 ist so ausgebildet, daß die erste Lochscheibe 8 über den ersten Auslaß 5 in das Gehäuse 2 eingeführt werden kann und in ihrem Randbereich auf der Stufe 20, welche durch eine Verjüngung des Gehäuses 2 gebildet wird, aufliegt. Im übrigen ist das Gehäuse 2 gleich dem in der Fig. 1 wiedergegebenen ausgebildet. Da die Lochscheibe 8 auf der Stufe 20 aufliegt, bedarf sie keiner besonderen Abstützung gegenüber dem stirnseitigen Ende 3. Demgemäß ist auch die zweite Lochscheibe 10 identisch zur Lochscheibe 8 ausgebildet und weist z.B. keinen in den Dämpfungs- und Filterraum 7 hineinragenden Ring auf.

In der Fig. 3 ist eine Ausführungsform eines Geräuschminderers 1 wiedergegeben, bei dem die Dichte des geräuschmindernden Einsatzes 12 variiert werden kann. Hierfür weist das Gehäuse 2 im Bereich des Auslasses 5 an der Innenseite mehrere Ringnuten 18, 21 und 22 auf, in die jeweils der Sicherungsring 17 entsprechend der gewünschten Pressung des geräuschmindernden Einsatzes 12 eingesetzt werden kann. Bei der in der Fig. 3 wiedergegebenen Ausführungsform ist der Sicherungsring 17 in die Ringnut 18 eingesetzt, so daß der geräuschmindernde Einsatz 12 seine maximale Pressung erfährt. Wird der Sicherungsring 17 in die Ringnut 22 eingesetzt, wird der Innenraum der Dämpfungs- und Filterkammer 7 vergrößert, wodurch der geräuschmindernde Einsatz 12, z. B. das Faservlies 13, lockerer in der Kammer 7 liegt. Durch diese Maßnahme kann das Dämpfungsverhalten der Dämpfungs- und Filterkammer 7 exakt auf unterschiedliche Druckfrequenzen der Druckluft eingestellt werden.

Eine weitere Ausführungsform des Geräuschminderers 1 ist in der Fig. 4 wiedergegeben, bei der der Auslaß 5 nicht mit einer eingesetzten zweiten Lochscheibe sondern mit einem aufgeschraubten Schraubdeckel 23 verschlossen ist. Hierfür weist das Gehäuse 2 im Bereich des Auslasses 5 an der Außenseite ein Gewinde 24 auf, auf das der Schraubdeckel 23, welcher ein korrespondierendes Innengewinde 25 aufweist, aufschraubbar ist. Die Stirnfläche des Schraubdeckels 23 ist als Lochscheibe 26 ausgebildet, und weist die für den Austritt der Druckluft erforderlichen Öffnungen 27 auf. Durch mehr oder weniger weites Aufschrauben des Schraubdeckels 23 auf das Gewinde 24 des Gehäuses 2 kann ebenfalls das Volumen der Dämpfungs- und Filterkammer 7, die sich hinter der Lochscheibe 26 erstreckt, variiert werden. Somit ist auch über den Schraubdeckel 23, der selbsthemmend auf dem Gehäuse 2 aufgeschraubt ist, die Dämpfung wirkungsvoll an verschiedene Frequenzen der Druckluft anpaßbar.

Der erfindungsgemäße Geräuschminderer 1 bietet somit den Vorteil, daß das Geräusch der aus einem Druckluftwerkzeug austretenden Druckluft wirkungsvoll auf einen sehr niederen Wert gedämpft werden kann. Ferner bietet der Geräuschminderer 1 den Vorteil, daß durch die Reduzierung der Geschwindigkeit der das Gehäuse 2 durchströmenden Druckluft ein relativ geringer Widerstand auf diese ausgeübt wird, wodurch die Arbeitsleistung des Druckluftwerkzeuges nur geringfügig, d.h. im Bereich von 2 bis 3 % gegenüber einer Reduzierung von 20 % bei den bekannten Geräuschminderern, vermindert wird. Ferner bietet der erfindungsgemäße Geräuschminderer den Vorteil, daß der Anschlußstutzen 4 mit einem (in der Zeichnung 4 nicht gezeigten) Druckluftschlauch verbunden werden kann, so daß die aus dem Druckluftwerkzeug austretende Druckluft aus dem Bereich der Arbeitsfläche und von der das Druckluftwerkzeug bedienenden Person abgeleitet werden kann. Schließlich wird ein großer Vorteil darin gesehen, daß der erfindungsgemäße Geräuschminderer 1 auf einfache Weise und unter Zuhilfenahme einfacher Mittel schnell zerlegt werden kann, die einzelnen Teile z. B. mit einem Lösungsmittel gereinigt werden können, und die gereinigten Teile wieder mühelos zusammengesetzt und miteinander verbunden werden können. Stellt die das Druckluftwerkzeug bedienende Person einen Leistungsabfall am Druckluftwerkzeug aufgrund einer allmählichen Verschmutzung des Geräuschminderers 1 z. B. durch Schmieröl fest, so kann der Geräuschminderer 1 innerhalb kürzester Zeit wieder einsatzbereit gemacht werden. Das Druckluftwerkzeug kann dann wieder mit voller Leistung arbeiten.

**Patentansprüche**

1. Geräuschminderer (1), insbesondere für Druckluftwerkzeuge, mit einem einen Anschlußstutzen (4) aufweisenden Gehäuse (2), in dem ein geräuschmindernder Einsatz (12) vorgesehen ist, dadurch gekennzeichnet, daß der Anschlußstutzen in eine Diffusorkammer (6) mündet, anschließend an die Diffusorkammer (6) eine den geräuschmindernden Einsatz (12) enthaltende Dämpfungs- und Filterkammer (7) vorgesehen ist, und das Gehäuse (2) einen relativ zum Querschnitt des Anschlußstutzens (4) weiten Auslaß (5) aufweist.

2. Geräuschminderer nach Anspruch 1, dadurch gekennzeichnet, daß der geräuschmindernde Einsatz (12) ein Faservlies (13) ist, welches insbesondere mattenförmig ausgebildet ist und zusammengerollt in der Dämpfungs- und Filterkammer (7) angeordnet ist.

3. Geräuschminderer nach einem der vorhergehenden Ansprüche, dadurch gekennzeichnet, daß die Diffusorkammer (6) durch eine erste, insbesondere an einer an der Innenwand des Gehäuses (2) vorgesehenen Stufe (20) anliegende Lochscheibe (8) von der Dämpfungs- und Filterkammer (7) abgetrennt ist.

4. Geräuschminderer nach Anspruch 3, dadurch gekennzeichnet, daß die erste Lochscheibe (8) einseitig mit einer Abstützung (14) versehen ist, über die sie an einer Stirnwand (3) des Gehäuses (2) anliegt, und über die die Höhe der Diffusorkammer (6) bestimmt wird.

5. Geräuschminderer nach einem der vorhergehenden Ansprüche, dadurch gekennzeichnet, daß die Dämpfungs- und Filterkammer (7) von einer ersten und einer zweiten, insbesondere gleich ausgebildeten Lochscheibe (8 und 10) begrenzt wird.

6. Geräuschminderer nach einem der vorhergehenden Ansprüche, dadurch gekennzeichnet, daß der Auslaß (5) durch eine zweite, insbesondere auf dem geräuschmindernden Einsatz (12) aufliegende und sich an diesem abstützende Lochscheibe (10) gebildet wird.

7. Geräuschminderer nach einem der Ansprüche 5 oder 6, dadurch gekennzeichnet, daß die zweite Lochscheibe (10) über ein Sicherungselement (16), z.B. über einen Sicherungsring (17) im Gehäuse (2) befestigt ist, wobei insbesondere die Innenseite des Gehäuses (2) im Bereich des Auslasses (5) mit wenigstens einer Ringnut (18, 21 oder 22) für das Sicherungselement (16) versehen ist.

8. Geräuschminderer nach einem der Ansprüche 5 oder 6, dadurch gekennzeichnet, daß die zweite Lochscheibe (10) an einem auf oder in das Gehäuse (2) einschraubbaren Schraubdeckel (23) vorgesehen ist.

9. Geräuschminderer nach einem der vorhergehenden Ansprüche, dadurch gekennzeichnet, daß das Gehäuse (2) im wesentlichen eine zylinderförmige Gestalt aufweist und der Anschlußstutzen (4) koaxial am Gehäuse (2) angeordnet ist.

10. Geräuschminderer nach einem der vorhergehenden Ansprüche, dadurch gekennzeichnet, daß er über einen Druckluftschlauch mit dem Luftauslaß des Druckluftwerkzeuges verbindbar ist.

Fig.1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | GB-A-2 056 563 (ROBERT BOSCH GMBH)<br>* das ganze Dokument *<br>– – – | 1,3,9,6,7,<br>8 | B 25 D 17/12<br>F 01 N 1/08 |
| X,Y | US-A-4 316 523 (BORETTI)<br>* das ganze Dokument *<br>– – – | 1,2,9,6,8 | |
| Y | EP-A-0 132 696 (KNORR-BREMSE AG)<br>* Figur 1 *<br>– – – | 7 | |
| X | DE-A-1 652 205 (STOLL KG)<br>* Seiten 5 - 8; Figuren *<br>– – – | 1,10 | |
| A | GB-A-2 008 194 (DELTA MATERIALS RESEARCH)<br>* Zusammenfassung; Figur *<br>– – – | 1 | |
| A | EP-A-0 062 009 (PANDA)<br>* Zusammenfassung; Figur 1 *<br>– – – – – | 1 | |
| | | | **RECHERCHIERTE SACHGEBIETE (Int. Cl.5)**<br><br>B 25 D<br>F 01 N |

Der vorliegende Recherchenbericht wurde für alle Patentansprüche erstellt

| Recherchenort | Abschlußdatum der Recherche | Prüfer |
|---|---|---|
| Den Haag | 11 Juni 91 | WEIAND T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
----------------------------------------------------------------
& : Mitglied der gleichen Patentfamilie, übereinstimmendes Dokument